# EUROPÄISCHE PATENTSCHRIFT

(11) **EP 0 878 109 B1**
(45) Veröffentlichungstag und Bekanntmachung des Hinweises auf die Patenterteilung: **25.08.2004**
(21) Anmeldenummer: 97945754.6
(22) Anmeldetag: 16.10.1997
(51) Int. Cl.: H04Q 7/38, H04Q 7/22, H04M 15/00

(54) **VERFAHREN UND MOBIL-KOMMUNIKATIONSSYSTEM ZUM ROUTEN VON ANRUFVERBINDUNGEN**
METHOD AND MOBILE COMMUNICATION SYSTEM FOR ROUTING OF CALL CONNECTIONS
PROCEDE ET SYSTEME DE COMMUNICATION MOBILE POUR ACHEMINEMENT DE CONNEXIONS D'APPELS

(30) Priorität: 18.11.1996 DE 19647627
(43) Veröffentlichungstag der Anmeldung: 18.11.1998
(73) Patentinhaber: SIEMENS AKTIENGESELLSCHAFT, 80333 München (DE)
(72) Erfinder: WIEHE, Ulrich, D-36251 Bad Hersfeld (DE)
(86) Internationale Anmeldenummer: PCT/DE1997/002378
(87) Internationale Veröffentlichungsnummer: WO 1998/023117

(56) Entgegenhaltungen:
- EP-A- 0 675 663
- WO-A-96/20574

## Beschreibung

Die Erfindung betrifft ein Verfahren und ein Mobil-Kommunikationssystem zum Routen von Anrufverbindungen bei jeweils an einen Funkteilnehmer gerichteten Anrufen, der unabhängig vom momentanen Aufenthaltsort zumindest in seinem Heimatnetz registriert ist.
EP 675663A2 WO 96-20574A1 offenbaren ein derartiges Verfahren und Mobil-Kommunikationssystem, wobei ein optimized routing gemäß GSM-Standard vorgesehen ist.

Ein zellulares Mobil-Kommunikationssystem wie beispielsweise das nach dem GSM-Standard (Global System for Mobile Communication) ist aus einer Vielzahl von Funkzellen aufgebaut und bietet dem Funkteilnehmer ein Höchstmaß an Mobilität im Rahmen der Funkkommunikation. Das länderübergreifende internationale Mobil-Kommunikationssystem nach dem GSM-Standard weist ein funktechnisches Teilsystem zum Auf- und Abbau und zur Aufrechterhaltung von Funkverbindungen zwischen Mobilstationen und Basisstationen, ein vermittlungstechnisches Teilsystem zum Aufbau, Verwalten und Auslösen von Verbindungen unter Berücksichtigung mobilitätsspezifischer Funktionen sowie ein Betriebs- und Wartungsteilsystem zur Überwachung von Betriebszuständen und zur Steuerung der im System verteilt angeordneten Netzkomponenten auf. Zu den Aufgaben des vermittlungstechnischen Teilsystems gehört u.a. die Verwaltung der Teilnehmerdaten der Funkteilnehmer, das Auffinden des Aufenthaltsorts eines angerufenen Funkteilnehmers bzw. der Mobilstation an jedem beliebigen Ort des GSM-Versorgungsbereiches, der Verbindungsaufbau und -abbau sowie die Erfassung der Gebührendaten (Vergebührung) für Anrufe, die vom Funkteilnehmer abgehen bzw. beim Funkteilnehmer ankommen.

Zur Durchführung der Aufgaben verfügt das vermittlungstechnische System über Mobilvermittlungsstellen, die insbesondere die mobilitätsbedingten Verfahren und Funktionen beim Aufund Abbau von Verbindungen und bei der Verbindungsbehandlung während einer Verbindung innerhalb des Mobilfunknetzes und an den Schnittstellen zu anderen Kommunikationsnetzen übernehmen, sowie über Besucherregister und Heimatregister, von denen das Besucherregister die Teilnehmerdaten der momentan im Versorgungsbereich einer zugeordneten Mobilvermittlungsstelle befindlichen Funkteilnehmer temporär enthält, während im Heimatregister die Teilnehmerdaten der Funkteilnehmer permanent verwaltet werden.

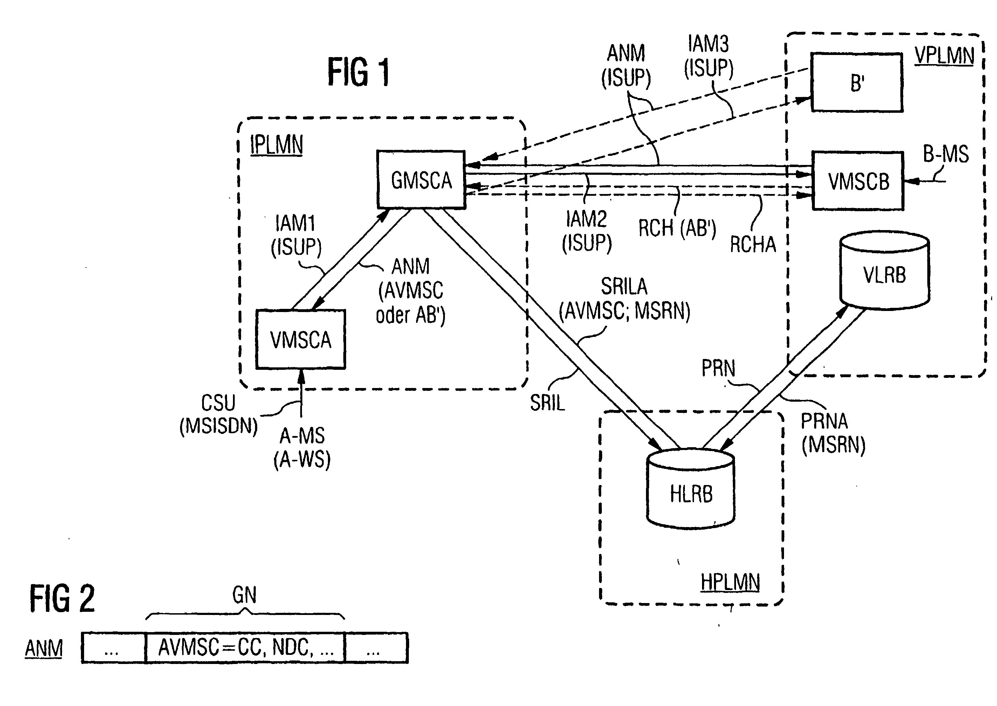

Gemäß der GSM-Empfehlung 03.79, Version 0.9.0 vom 31.07.1996 - siehe insbesondere Figur 1 (Architektur) und Figur 3 (Ablaufdiagramm) sowie Kapiteln 9.2.2 und 9.2.4 - kann ein optimiertes Routen von Anrufverbindungen unterstützt werden. Erhält die Mobilvermittlungsstelle (VMSCA) eines Netzes eine Anforderung zum Aufbau einer Signalisierungsverbindung auf Grund eines an einen Funkteilnehmer (B-Teilnehmer) gerichteten Anrufs, wird eine Nachricht zum Verbindungsaufbau an eine Zugangs-Mobilvermittlungsstelle (GMSCA) des Netzes gesendet. Die Zugangs-Mobilvermittlungsstelle (GMSCA)hat gemäß dem optimierten Routen die Möglichkeit, eine Nachricht zur Aufenthaltsabfrage an das Heimatnetz (HPLMNB) des angerufenen Funkteilnehmers netzübergreifend zu richten. Der Zweck der Aufenthaltsabfrage liegt in der Anforderung von Informationen - u.a. einer Zieladresse -, anhand der von der Zugangs-Mobilvermittlungsstelle entschieden werden kann, ob eine direkte Verbindung zu einer Besucher-Mobilvermittlungsstelle, die z.B. für den angerufenen Funkteilnehmer aufgrund seines Aufenthaltsortes aktuell zuständig ist, aufgebaut werden kann.

Dabei ist es nach der genannten GSM-Empfehlung 03.79 notwendig, eigens eine Referenznummer (call reference number) zur-Identifikation des Anrufs in der Ursprungs-Mobilvermittlungsstelle zu vergeben, diese zur Zugangs-Mobilvermittlungsstelle zu übertragen und dort zu speichern. Weiterhin ist es erforderlich - nachdem u.a. überprüft wurde, ob aus Gründen der Vergebührung dem Aufbau einer direkten Verbindung zur Besucher-Mobilvermittlungsstelle nichts im Wege steht - eine gesonderte Nachricht (note call destination) durch die Zugangs-Mobilvermittlungsstelle zu starten, in der die Referenznummer zusammen mit einer Zieladresse zur Ursprungs-Mobilvermittlungsstelle rückgesendet wird. Die Ursprungs-Mobilvermittlungsstelle ordnet die Zieladresse mit Hilfe der Referenznummer einem Anruf zu, speichert die Zieladresse für die Vergebührung und gibt die Referenznummer zur Vergabe für einen weiteren Anruf wieder frei. Für den Fall, daß eine Anrufumlenkung für den angerufenen Funkteilnehmer eingestellt ist, wird von der Zugangs-Mobilvermittlungsstelle die gesonderte Nachricht (note call destination) mit einer aus der Anrufumlenkung sich ergebenden neuen Zieladresse erneut gesendet. Die Signalisierung der Zieladresse erfolgt gemäß dem mobilfunkspezifischen Anwenderteil (MAP) des zentralen Zeichengabesystems CCS7 und beginnt bereits bei Eintreffen der vom Heimatnetz bereitgestellten Information, daß optimiertes Routen durchführbar ist.

Aufgabe der Erfindung ist es, ein Verfahren und ein Mobil-Kommunikationssystem anzugeben, durch das die Signalisierungslast beim optimierten Routen von Anrufverbindungen gegenüber dem bekannten Verfahren verringert werden kann.

Diese Aufgabe wird gemäß der Erfindung durch die Merkmale des Patentanspruchs 1 hinsichtlich des Verfahrens und durch die Merkmale des Patentanspruchs 9 hinsichtlich des Mobil-Kommunikationssystems gelöst. Weiterbildungen der Erfindung sind in den Unteransprüchen angegeben.

Eine geringere vermittlungstechnische Signalisierungslast zwischen der Vermittlungsstelle, die eine Anforderung zum Verbindungaufbau empfängt, und einer Zugangs-Mobilvermittlungsstelle, die optimiertes Routen netzübergreifend veranlaßt, wird dadurch erreicht, daß von der Zugangs-Mobilvermittlungsstelle eine Zieladresse, die vom Heimatnetz des angerufenen Funkteilnehmers bereitgestellt wird, nach Aufbau einer direkten Verbindung zu einer Besucher-Mobilvermittlungsstelle in eine Nachricht, die das Zustandekommen der Anrufverbindung signalisiert, eingefügt und zur Vermittlungsstelle rückgesendet, um dort zur Vergebührung der Anrufverbindung ausgewertet zu werden. Damit ist die Vergabe einer Referenznummer durch die Vermittlungsstelle, die die Vergebührung durchzuführen hat, und das Senden der gesonderten MAP-Nachricht (note call destination) durch die Zugangs-Mobilvermittlungsstelle nicht mehr notwendig.

Das Einfügen der Zieladresse in die Nachricht, durch die über das Zustandekommen der Anrufverbindung informiert wird, erst nach dem Aufbau der Anrufverbindung wirkt sich in Bezug auf den vermittlungstechnischen Signalisierungsaufwand besonders günstig aus, wenn eine Anrufumlenkung für den angerufenen Funkteilnehmer eingestellt ist. Dabei wird auf Grund der Anrufumlenkung von der Zugangs-Mobilvermittlungsstelle bei Empfang einer Nachricht, die eine neue Zieladresse enthält, eine Verbindung zu einer durch die neue Zieladresse festgelegten Vermittlungsstelle aufgebaut. Bei Empfang der Nachricht, die das Zustandekommen der Anrufverbindung signalisiert, wird von der Zugangs-Mobilvermittlungsstelle die neue Zieladresse in diese Nachricht eingefügt und zur Vermittlungsstelle rückgesendet, die sie zur Vergebührung der Anrufverbindung auswertet. Für diesen Fall braucht die Signalisierung nicht - wie beim bekannten Verfahren - doppelt, d.h. zunächst auf Grund des Aufbaus der Verbindung zum Funkteilnehmer und danach auf Grund des Aufbaus der Verbindung zu dem durch die Anrufumlenkung festgelegten neuen Ziel, sondern nur einmal, d.h. nach dem Aufbau zum neuen Ziel auf Grund der neuen Zieladresse, zwischen Zugangs-Mobilvermittlungsstelle und Ursprungs-Vermittlungsstelle durchgeführt zu werden.

Gemäß einer Weiterbildung der Erfindung wird die Zieladresse in einem Informationsfeld der Nachricht übertragen, das zum Eintragen von Ziffern vorgesehen ist. Dabei ist es von Vorteil, wenn die Zieladresse zumindestens eine Landeskennzahl zur Identifikation des Landes in einem länderübergreifenden zellularen Mobilfunknetz, und gegebenenfalls zusätzlich eine nationale Kennzahl zur Identifikation des Landesnetzes des länderübergreifenden zellularen Mobilfunknetzes aufweist.

Von Vorteil ist es, wenn der Anruf von einem Funkteilnehmer initiiert und die Anforderung zu einem Verbindungaufbau von einer Mobilvermittlungsstelle eines Mobilfunknetzes empfangen wird. Alternativ dazu kann der Anruf auch von einem Festnetzteilnehmer gestartet und die Anforderung zu einem Verbindungsaufbau von einer Vermittlungsstelle eines Festnetzes empfangen werden.

Als günstig hat sich erwiesen, die Nachricht zum Verbindungsaufbau, die von der Vermittlungsstelle an eine Zugangs-Mobilvermittlungsstelle gesendet wird, und die Nachricht zur Signalisierung des Zustandekommens der Anrufverbindung, die von der Zugangs-Mobilvermittlungsstelle an die Vermittlungsstelle rückgesendet wird, in einem Benutzerteil des zentralen Zeichengabesystems CCS7 zu übertragen.

Das Mobil-Kommunikationsystem, das eine geringere vermittlungstechnische Signalisierungslast bewirkt, umfaßt eine Vermittlungsstelle, die Mittel zum Empfang der Nachricht, in der eine Anforderung für den Aufbau einer Signalisierungsverbindung enthalten ist, und Mittel zum Auswerten einer Zieladresse für die Vergebührung der Anrufverbindung enthält. Darüber hinaus ist das System mit einer Zugangs-Mobilvermittlungsstelle ausgestattet, die Mittel zum netzübergreifenden Senden einer Nachricht für eine Aufenthaltsabfrage an das Heimatnetz des angerufenen Funkteilnehmers und Mittel zum Aufbau einer direkten Verbindung zu einer Besucher-Mobilvermittlungsstelle aufweist. Weiterhin weist sie Mittel zum Empfang einer Nachricht auf, die von der Besucher-Mobilvermittlungsstelle oder bei einer für den angerufenen Funkteilnehmer eingestellten Anrufumlenkung von einer anderen Vermittlungsstelle gesendet wird und das Zustandekommen der Anrufverbindung signalisiert. Die Zugangs-Mobilvermittlungsstelle weist insbesondere Mittel auf, die zum Einfügen einer Zieladresse, die vom Heimatnetz bereitgestellt wird, oder einer Zieladresse, die bei der Anrufumlenkung von der Besucher-Mobilvermittlungsstelle bereitgestellt wird, in die Nachricht vorgesehen sind, und Mittel zum Senden der Zieladresse zur Vermittlungsstelle auf.

Die Erfindung wird anhand eines in Figuren dargestellten Ausführungsbeispieles erläutert. Im einzelnen zeigen
- Figur 1: in einem Blockschaltbild den Nachrichtenfluß zum Routen einer Anrufverbindung beim optimierten Routen über Netzgrenzen hinweg und
- Figur 2: den Aufbau der Nachricht zur Signalisierung des Zustandekommens der Anrufverbindung, in die die Zieladresse der Anrufverbindung eingetragen ist.

Das Blockschaltbild in Figur 1 zeigt am Beispiel des länderübergreifenden zellularen Mobilfunknetzes gemäß dem GSM-Standard den Ablauf zum Routen einer Anrufverbindung bei einem an einen Funkteilnehmer gerichteten Anruf. Dabei wird optimiertes Routen unterstützt. Im vorliegenden Beispiel sei angenommen, daß der Anruf von einem A-Funkteilnehmer A-MS, der sich im Zuständigkeitsbereich einer Mobilvermittlungsstelle VMSCA eines Netzes IPLMN befindet, initiiert und an einen B-Funkteilnehmer B-MS, der sich im Zuständigkeitsbereich einer Mobilvermittlungsstelle VMSCB eines Netzes VPLMN befindet, gerichtet wird (mobile-to-mobile call). Ebenso kann der Anruf von einem A-Festnetzteilnehmer A-WS an den B-Funkteilnehmer B-MS gerichtet werden. Dabei übernimmt eine Vermittlungsstelle in einem Festnetz das Routen des Anrufs vom Festnetz zum Netz IPLMN. Der B-Funkteilnehmer B-MS ist mit seinen Teilnehmerdaten zumindestens in einem Netz HPLMN registriert, das sein Heimatnetz (Home Public Land Mobile Network) darstellt. Aufgrund seines momentanen Aufenthaltsorts ist der B-Funkteilnehmer B-MS vorübergehend in einem Netz VPLMN eingebucht, das sein Besuchernetz (Visited Public Land Mobile Network) darstellt. Der Einfachheit halber sei auch angenommen, daß die Netze IPLMN, HPLMN und VPLMN einen identischen oder zumindestens ähnlichen Netzaufbau gemäß der Struktur des länderübergreifenden internationalen GSM-Mobilfunknetzes aufweisen, jedoch in unterschiedlichen Ländern von entsprechenden Netzbetreibern betrieben werden. So sei bespielsweise angenommen, daß der A-Funkteilnehmer A-MS von einem Mobilfunknetz IPLMN in Deutschland aus anruft und der B-Funkteilnehmer B-MS im Mobilfunknetz HPLMN der Schweiz beheimatet ist, jedoch aufgrund seines derzeitigen Aufenthaltsorts in einem Mobilfunknetz VPLMN von Deutschland als Besucher registriert ist.

Das Blockschaltbild zeigt im Netz IPLMN die Mobilvermittlungsstelle VMSCA, die als Ursprungs-Mobilvermittlungsstelle den Anruf vom A-Funkteilnehmer empfängt, und eine Zugangs-Mobilvermittlungsstelle GMSCA, die an der Schnittstelle zu anderen Netzen angeordnet ist. Im Netz HPLMN befindet sich zumindestens ein Heimatregister, in dem die Teilnehmerdaten des B-Funkteilnehmers gespeichert sind, während das Netz VPLMN ein Besucherregister VLRB, in dem Teilnehmerdaten des Funkteilnehmers B-MS für die Dauer des Aufenthalts im Zuständigkeitsbereich gespeichert sind, und die Mobilvermittlungsstelle VMSCB, die als Besucher-Mobilvermittlungsstelle für den Funkteilnehmer B-MS auf Grund seines Aufenthalts zuständig ist, aufweist. Darüber hinaus kann in die Anrufverbindung eine Vermittlungsstelle B' involviert sein, wenn für den angerufenen Funkteilnehmer B-MS eine Anrufumlenkung mit einer Zieladresse eingestellt ist, die zu der Vermittlungsstelle B' führt. Die Vermittlungsstelle B' liegt-gemäß der Darstellung in Figur 1 in demselben Netz VPLMN, kann sich aber auch in einem anderen Netz befinden.

Der A-Funkteilnehmer wählt die Teilnehmerrufnummer des B-Funkteilnehmers durch Eingabe der Nummer in eine nicht dargestellte Funkteilnehmerstation. Die Funkteilnehmerstation sendet daraufhin eine Nachricht CSU (call setup) aus, mit der der Aufbau einer Signalisierungsverbindung angefordert wird. Die Nachricht CSU wird von einem Basisstationssystem im Netz IPLMN empfangen und zur Mobilvermittlungsstelle VMSCA übertragen. In der Nachricht CSU ist die internationale Funkteilnehmerrufnummer MSISDN des B-Funkteilnehmers B-MS enthalten. Die Mobilvermittlungsstelle VMSCA fordert von einem der Mobilvermittlungsstelle zugeordneten Besucherregister Informationen zur Behandlung des abgehenden Anrufs an. Das Besucherregister quittiert die Anforderung mit einer Information, daß Verbindungen von und zu der Funkteilnehmerstation des anrufenden Funkteilnehmers A-MS aufgebaut werden dürfen. Die Mobilvermittllungsstelle VMSCA bewertet die Teilnehmerrufnummer MSISDN und sendet, da es sich um einen Funkteilnehmer eines anderen Netzes handelt, eine Nachricht IAM1 (Initial Address Message) zur Zugangs-Mobilvermittlungsstelle GMSCA aus. Die Nachricht IAM1 wird gemäß dem ISDN-Benutzerteil ISUP, der auf den Verbindungsleitungen zwischen den Mobilvermittlungsstellen verwendet wird, des zentralen CCS7-Zeichengabesystems signalisiert. Dabei wird auf die üblicherweise in der Nachricht IAM1 mitübertragene Referenznummer für die Zuordnung zum jeweiligen Anruf verzichtet.

Befindet sich - wie im vorliegenden Fall - die Zugangs-Mobilvermittlungsstelle GMSCA in einem anderen Netz als das für den B-Funkteilnehmer B-MS zuständige Heimatregister HLRB, wird eine Nachricht SRIL zur Aufenthaltsabfrage von der Zugangs-Mobilvermittlungsstelle GMSCA in das Heimatnetz HPLMN zum Heimatregister HLRB netzübergreifend gesendet. Die Aufenthaltsabfrage (send location info) enthält einen Hinweis, daß es sich um die Anforderung einer Aufenthaltsinformation bei Unterstützung des optimierten Routens handelt. Die Nachrichtenübertragung erfolgt gemäß dem mobilfunkspezifischen Anwenderteil (MAP) des zentralen CCS7-Zeichengabesystems. Das Heimatregister HLRB überprüft bei Empfang der Nachricht SRIL, ob der Aufbau einer direkten Verbindung zwischen der Zugangs-Mobilvermittlungsstelle GMSCA im Netz IPLMN und der Besucher-Mobilvermittlungsstelle VMSCB im Netz VPLMN aus Gründen der-Vergebührung des Anrufs durchführbar ist. Diese Überprüfung besteht beispielsweise aus einem Vergleich von Länderkennungen, die der Zugangs-Mobilvermittlungsstelle GMSCA und der Besucher-Mobilvermittlungsstelle VMSCB oder dem Heimatregister HLRB zugeordnet sind. Die Vergebührungsanforderungen werden dabei so festgelegt, daß für einen Anruf, der gemäß dem optimierten Routen behandelt wird, nicht höhere Gebühren anfallen dürfen als für einen Anruf, der wie bei einer üblichen Leitweglenkung über das Heimatnetz des angerufenen Funkteilnehmers geführt wird. Der Länderkennungsvergleich stellt nur eine einfache Maßnahme zur Überprüfung, ob einem direkten Verbindungsaufbau aus Gründen der Vergebührung des Anrufes nichts im Wege steht, dar. Aufwendigere Maßnahmen zur Unterstützung oder Ablehnung des optimierten Routens können ohne weiteres entweder im Heimatregister HLRB selbst implementiert oder auch auf die Zugangs-Mobilvermittlungsstelle, die die Aufenthaltsabfrage startet, verlagert werden. Auch ist es möglich, bei einer Verlagerung aufwendigerer Prüfungsmaßnahmen auf die Zugangs-Mobilvermittlungsstelle die einfache Überprüfungsmöglichkeit durch Länderkennungsvergleich beim jeweiligen Heimatregister zu belassen.

Dadurch, daß das Heimatregister HLRB den Länderkennungsvergleich selbst durchführt, kann bei positivem Vergleichsergebnis sofort eine Nachricht PRN zum Besucherregister VLRB im Netz VPLMN gesendet werden. Die Nachricht PRN (provide roaming number) dient üblicherweise zur Anforderung einer temporären Aufenthaltsrufnummer MSRN (Mobile Subscriber Roaming Number), die von dem Besucherregister VLRB vergeben wird. Bevor das Heimatregister HLRB die Nachricht PRN gemäß dem mobilfunkspezifischen Anwenderteil (MAP) zum Besucherregister VLRB aussendet, wird von ihm zuvor sicherheitshalber ermittelt, ob das Besucherregister VLRB das optimierte Routen unterstützt oder nicht. Ist dies der Fall, vergibt das Besucherregister VLRB eine temporäre Aufenthaltsrufnummer MSRN und sendet sie in einer Nachricht PRNA zum Heimatregister HLRB zurück.

Empfängt das Heimatregister HLRB als Quittung in der Nachricht PRNA eine Information, daß der B-Funkteilnehmer B-MS erreichbar ist, wird eine Nachricht SRILA erzeugt und zur Zugangs-Mobilvermittlungsstelle GMSCA als Quittung für die Aufenthaltsabfrage SRIL rückgesendet. Dabei enthält die Nachricht SRILA zumindestens eine Zieladresse AVMSC, die vorzugsweise eine Information zur Identifikation der vom optimierten Routen betroffenen Besucher-Mobilvermittlungsstelle VMSCB ist. Empfängt das Heimatregister HLRB eine temporäre Aufenthaltsrufnummer MSRN vom Besucherregister VLRB, wird in der Nachricht SRILA zusätzlich die bereitgestellte Aufenthaltsrufnummer MSRN zusätzlich zur Zieladresse AVMSC zur Zugangs-Mobilfunkvermittlungsstelle GMSCA übertragen.

Die Zugangs-Mobilvermittlungsstelle GMSCA sorgt anhand der eingetroffenen Aufenthaltsnummer MSRN für den direkten Verbindungsaufbau zur Besucher-Mobilvermittlungsstelle VMSCB. Dazu sendet die Zugangs-Mobilvermittlungsstelle GMSCA eine Nachricht IAM2 zum Verbindungsaufbau gemäß dem ISDN-Benutzerteil ISUP zur Mobilvermittlungsstelle. Sobald der angerufene Funkteilnehmer B-MS seine Funkteilnehmerstation betätigt, und damit die Anrufverbindung zustandekommt, wird dies der Zugangs-Mobilvermittlungsstelle GMSCA durch die Nachricht ANM signalisiert. Die Nachricht ANM wird über das Basisstationssystem im Netz VPLMN empfangen und an die Mobilvermittlungsstelle VMSCB gesendet, bevor sie ebenfalls gemäß dem ISDN-Benutzerteil ISUP zur Zugangs-Mobilvermittlungsstelle GMSCA übertragen wird. Nach Eintreffen der Nachricht ANM wird die Zieladresse AVMSC von der Zugangs-Mobilvermittlungsstelle GMSCA in die Nachricht ANM eingefügt und zur Ursprungs-Mobilvermittlungsstelle VMSCA des Netzes IPLMN oder zur Vermittlungsstelle des Festnetzes gemäß dem ISDN-Benutzerteil ISUP übertragen und dort zur Vergebührung der Anrufverbindung herangezogen. Damit ist die in den mobilfunkspezifischen Anwenderteil (MAP) des zentralen Zeichengabesystems CCS7 aufgenommene gesonderte Nachricht (note call destination) mit der jeweiligen Referenznummer überflüssig. An deren Stelle wird die Nachricht ANM verwendet, die vor der Vergebührung der Anrufverbindung durch die Ursprungs-Mobilvermittlungsstelle VMSCA oder die Vermittlungsstelle im Festnetz ohnehin abgewartet werden muß. Die Nachricht ANM enthält eine Information, welcher Anruf gemäß dem optimierten Routen zu vergebühren ist.

Für den Fall, daß eine Anrufumlenkung eingestellt ist, z.B. wenn der B-Funkteilnehmer B-MS nach Ablauf einer bestimmten Zeitdauer nicht abhebt, sendet die Mobilvermittlungsstelle VMSCB eine Nachricht RCH (resume call handling) zur Zugangs-Mobilvermittlungsstelle GMSCA. In der Nachricht RCH ist eine neue Zieladresse AB' enthalten, die die Vermittlungsstelle B' als Zielort der Anrufumlenkung definiert. Die von der Mobilvermittlungsstelle VMSCB eintreffende Nachricht RCH wird von der Zugangs-Mobilvermittlungsstelle GMSCA mit einer Quittungsnachricht RCHA bestätigt. Die Zugangs-Mobilvermittlungsstelle GMSCA wertet die eingetroffene Zieladresse AB', die z.B. aus einer Teilnehmerrufnummer bestehen kann, aus und startet einen direkten Verbindungsaufbau zur Vermittlungsstelle B', die z.B. in einem Fetnetz liegt. Dazu sendet die Zugangs-Mobilvermittlungsstelle GMSCA eine Nachricht IAM3 zum Verbindungsaufbau gemäß dem ISDN-Benutzerteil ISUP zur Vermittlungsstelle B' aus. Sobald der angerufene Funkteilnehmer B-MS die Fernsprechteilnehmerstation, zu der in das Festnetz umgelenkt wurde, betätigt, und damit die Anrufverbindung zustandekommt, wird dies der Zugangs-Mobilvermittlungsstelle GMSCA durch die Nachricht ANM signalisiert. Die Nachricht ANM wird Festnetz empfangen und an die Vermittlungsstelle B' signalisiert, bevor sie ebenfalls gemäß dem ISDN-Benutzerteil ISUP zur Zugangs-Mobilvermittlungsstelle GMSCA übertragen wird. Nach Eintreffen der Nachricht ANM wird die neue Zieladresse AB' von der Zugangs-Mobilvermittlungsstelle GMSCA in die Nachricht ANM eingefügt und zur Ursprungs-Mobilvermittlungsstelle VMSCA des Netzes IPLMN oder zur Vermittlungsstelle des Festnetzes gemäß dem ISDN-Benutzerteil ISUP übertragen und dort zur Vergebührung der Anrufverbindung herangezogen.

Die Nachricht ANM mit der Zieladresse AVMSC oder AB' wird nur einmalig gesendet, sobald die Anrufverbindung steht, d.h. auch für den Fall der Anrufumlenkung bedarf es nicht - wie beim bekannten verfahren - einer doppelten Übertragung der gesonderten Nachricht, die jeweils nur zum Zwecke der Zuordnung der Zieladresse zu dem jeweiligen Anruf anhand der Referenznummer vor dem Zustandekommen der direkten Anrufverbindung gesendet wird.

Durch die Erfindung kann die direkte Verbindung zur Unterstützung des optimierten Routens zwischen Mobilvermittlungsstellen verschiedener Netze bei einem an einen B-Funkteilnehmer gerichteten Anruf aufgebaut und dabei durch Verwendung der Nachricht ANM eine gegenüber dem bekannten Verfahren geringere vermittlungstechnische Signalisierungslast zwischen den Netzeinrichtungen erzielt wird. Die Verringerung der Signalisierungslast beruht auf dem Verzicht von Referenznummer und deren Speicherung in den jeweiligen Mobilvermittlungsstellen und auf dem Verzicht der gesonderten Nachricht zur Rückübertragung der Referenznummer, die beim bekannten Verfahren zur Durchführung der Vergebührung für die jeweilige Anrufverbindung erforderlich ist.

Figur 2 zeigt den Aufbau der Nachricht ANM, durch die das Zustandekommen der Anrufverbindung beim optimierten Routen signalisiert wird. Die Nachricht enthält u.a. ein Informationsfeld GN (generic number), in das Ziffern eingetragen werden können. Daher wird die vom Heimatnetz bereitgestellte Zieladresse AVMSC oder die bei der Anrufumlenkung bereitgestellte Zieladresse (AB') vorzugsweise in dieses Informationsfeld GN von der Zugangs-Mobilvermittlungsstelle, die das optimierte Routen initiiert hat, eingeschrieben. Die Zieladresse weist zumindestens eine Landeskennzahl CC (country code) zur Identifikation des Landes in dem länderübergreifenden zellularen Mobilfunknetz nach dem GSM-Standard, und vorzugsweise zusätzlich auch eine nationale Kennzahl NDC (national destination code) zur Identifikation des Landesnetzes des länderübergreifenden zellularen Mobilfunknetzes auf. Zusätzliche Parameter wie Teile der Funkteilnehmerrufnummer, die z.B. sein Heimatregister festlegen, können u.U. noch zusätzlich optional in der Zieladresse enthalten sein.

## Patentansprüche

1. Verfahren zum Routen von Anrufverbindungen bei jeweils an einen Funkteilnehmer (B-MS) gerichteten Anrufen, der unabhängig vom momentanen Aufenthaltsort zumindestens in seinem Heimatnetz (HPLMN) registriert ist, bei dem
- in einem Netz (IPLMN) eine Nachricht (CSU) von einer Vermittlungsstelle (VMSCA) empfangen wird, die eine Anforderung zum Aufbau einer Signalisierungsverbindung und eine den angerufenen Funkteilnehmer kennzeichnende Information (MSISDN) enthält,
- auf Grund der Information des angerufenen Funkteilnehmers eine Nachricht (IAM1) zum Verbindungsaufbau von der Vermittlungsstelle (VMSCA) an eine Zugangs-Mobilvermittlungsstelle (GMSCA) gesendet wird,
- eine Nachricht (SRIL) zur Aufenthaltsabfrage von der Zugangs-Mobilvermittlungsstelle (GMSCA) an das Heimatnetz (HPLMN) des angerufenen Funkteilnehmers netzübergreifend gesendet wird, mit der die Unterstützung eines optimierten Routens signalisiert wird, bei dem eine direkte Verbindung von der Zugangs-Mobilvermittlungsstelle (GMSCA) zu einer Besucher-Mobilvermittlungsstelle.(VMSCB) aufgebaut werden kann,
- vom Heimatnetz (HPLMN) eine Zieladresse (AVMSC) bereitgestellt und in einer Nachricht (SRILA) zur Zugangs-Mobilvermittlungsstelle (GMSCA) netzübergreifend gesendet wird, die die direkte Verbindung zur Besucher-Mobilvermittlungsstelle (VMSCB) aufbaut,
**dadurch gekennzeichnet, dass**
- von der Zugangs-Mobilvermittlungsstelle (GMSCA) bei Empfang einer Nachricht (ANM), die das Zustandekommen der Anruf-. verbindung signalisiert, die Zieladresse (AVMSC) in die Nachricht (AM) eingefügt und zur Vermittlungsstelle (VMSCA) rückgesendet wird, die die Zieladresse (AVMSC) zur Vergebührung der Anrufverbindung auswertet.

2. Verfahren nach Anspruch 1,
**dadurch gekennzeichnet,**
- **daß** bei einer für den angerufenen Funkteilnehmer eingestellten Anrufumlenkung von der Zugangs-Mobilvermittlungsstelle (GMSCA) bei Empfang einer Nachricht (RCH), die eine neue Zieladresse (AB') enthält, eine Verbindung zu einer durch die neue Zieladresse (AB') festgelegten Vermittlungsstelle (B') aufgebaut wird und daß
- bei Empfang der Nachricht (ANM), die das Zustandekommen der Anrufverbindung signalisiert, von der Zugangs-Mobilvermittlungsstelle (GMSCA) die neue Zieladresse (AB') in die Nachricht (ANM) eingefügt und zur Vermittlungsstelle (VMSCA) rückgesendet wird, die die neue Zieladresse (AB') zur Vergebührung der Anrufverbindung auswertet.

3. Verfahren nach Anspruch 1 oder 2,
**dadurch gekennzeichnet,**
**daß** die Zieladresse (AVMSC, AB') in ein Informationsfeld (GN) der Nachricht (ANM) eingetragen wird, das zur Aufnahme von Ziffern benutzt wird.

4. Verfahren nach einem der vorhergehenden Ansprüche,
**dadurch gekennzeichnet,**
**daß** die Zieladresse (AVMSC, AB') zumindestens eine Landeskennzahl (CC), durch die das Land eines länderübergreifenden zellularen Mobilfunknetzes identifizierbar ist, aufweist.

5. Verfahren nach Anspruch 4,
**dadurch gekennzeichnet,**
**daß** die Zieladresse (AVMSC, AB') zusätzlich eine nationale Kennzahl (NDC), durch die das Landesnetz des länderübergreifenden zellularen Mobilfunknetzes identifizierbar ist, aufweist.

6. Verfahren nach einem der vorhergehenden Ansprüche,
**dadurch gekennzeichnet,**
**daß** der Anruf von einem Funkteilnehmer (A-MS) initiiert wird und eine Mobilvermittlungsstelle eines Mobilfunknetzes als Vermittlungsstelle (VMSCA) die Nachricht (CSU), mit der der Aufbau der Signalisierungsverbindung angefordert wird, empfängt.

7. Verfahren nach einem der Ansprüche 1 bis 5,
**dadurch gekennzeichnet,**
**daß** der Anruf von einem Festnetzteilnehmer (A-WS) initiiert wird und eine Vermittlungsstelle eines Festnetzes die Nachricht, mit der der Aufbau der Signalisierungsverbindung angefordert wird, empfängt.

8. Verfahren nach einem der vorhergehenden Ansprüche,
**dadurch gekennzeichnet,**
**daß** die Nachricht (IAM1) zum Verbindungsaufbau, die von der Vermittlungsstelle (VMSCA) an eine Zugangs-Mobilvermittlungsstelle (GMSCA) gesendet wird, und die Nachricht (ANM) zur Signalisierung des Zustandekommens der Anrufverbindung, die von der Zugangs-Mobilvermittlungsstelle (GMSCA) an die Vermittlungsstelle (VMSCA) rückgesendet wird, gemäß einem Benutzerteil (ISUP) des zentralen Zeichengabesystems CCS7 übertragen werden.

9. Mobil-Kommunikationssystem zum Routen von Anrufverbindungen bei jeweils an einen Funkteilnehmer (B-MS) gerichteten Anrufen, der unabhängig vom momentanen Aufenthaltsort zumindestens in seinem Heimatnetz (HPLMN) registriert ist, mit
- einer Vermittlungsstelle (VMSCA),
- die Mittel zum Empfang einer Nachricht (CSU), in der eine Anforderung für den Aufbau einer Signalisierungsverbindung und eine den angerufenen Funkteilnehmer kennzeichnende Information (MSISDN) enthalten sind, aufweist und
- die Mittel zum Senden einer Nachricht (IAM1) für den Verbindungsaufbau auf Grund der Information des angerufenen Funkteilnehmers an eine Zugangs-Mobilvermittlungsstelle (GMSCA) aufweist, und
- die Mittel zum Auswerten einer Zieladresse (AVMSC, AB') für die Vergebührung der Ahrufverbindung aufweist, und mit
- der Zugangs-Mobilvermittlungsstelle (GMSCA)
- die Mittel zum netzübergreifenden Senden einer Nachricht (SRIL) für eine Aufenthaltsabfrage an das Heimatnetz (HPLMN) des angerufenen Funkteilnehmers und Mittel zum Aufbau einer direkten Verbindung zu einer Besucher-Mobilvermittlungsstelle (VMSCB) aufweist,
- die Mittel zum Empfangen einer Nachricht (ANM), die von der Besucher-Mobilvermittlungsstelle (VMSCB) oder bei einer für den angerufenen Funkteilnehmer (B-MS) eingestellten Anrufumlenkung von einer anderen Vermittlungsstelle (B') gesendet wird und das Zustandekommen der Anrufverbindung signalisiert, aufweist,
**dadurch gekennzeichnet, dass** sie
- Mittel zum Einfügen einer Zieladresse (AVMSC), die vom Heimatnetz (HPLMN) bereitgestellt wird, oder einer Zieladresse (AB'), die bei der Anrufumlenkung von der Besucher-Mobilvermittlungsstelle (VMSCB) bereitgestellt wird, in die Nachricht (ANM) und Mittel zum Senden der Zieladresse (AVMSC, AB') zur Vermittlungsstelle (VMSCA) aufweist.

## Claims

1. Method for routing a call connection for calls routed to a mobile subscriber (B-MS) in each case, who, regardless of his current location is at least registered in his home network (HPLMN), in which - in a network (IPLMN) a message (CSU) is received from a switching center (VMSCA) which contains a request for setting up a signaling connection and information identifying the called mobile radio subscriber (MSISDN),
- on the basis of the information of the called mobile subscriber a message (IAM1) for connection setup is sent from the switching center (VMSCA) to a Gateway Mobile Switching Center (GMSCA),
- a message (SRIL) for requesting the location is sent from the Gateway Mobile Switching Center (GMSCA) across the networks to the home network (HPLMN) of the called mobile subscriber with which support of optimized routing is signaled, in which a direct connection from the Gateway Mobile Switching Center (GMSCA) to a Visitor Mobile Switching Center.(VMSCB) can be established, - a destination address (AVMSC) provided by the home network (HPLMN) and sent in a message (SRILA) across the networks to the Gateway Mobile Switching Center (GMSCA) which sets up the direct connection to the Visitor Mobile Switching Center (VMSCB),
**characterized in that**
- on receiving a message (ANM) which signals the establishment of the call connection, the Gateway Mobile Switching Center (GMSCA) inserts the destination address (AVMSC) in the message (ANM) and returns it to the switching center (VMSCA) which evaluates the destination address (AVMSC) for billing the call connection.

2. Method according to Claim 1,
in which,
- for call forwarding selected for the called mobile subscriber a connection is set up by the Gateway Mobile Switching Center (GMSCA) on receipt of a message (RCH), containing a new destination address (AB') to a switching center (B') determined by the new destination address (AB') and in which
- on receipt of the message (ANM) which signals the establishment of the call connection, the Gateway Mobile Switching Center (GMSCA) inserts the new destination address (AB') into the message (ANM) and returns it to the switching center (VMSCA) which evaluates the new destination address (AB') for bailing the call connection.

3. Method in accordance with Claim 1 or 2,
in which,
the destination address (AVMSC, AB') is entered in an information field (GN) of the message (ANM) which is used to accept the digits.

4. Method in accordance with one of the previous claims
in which,
the destination address (AVMSC, AB') features at least one Country Code (CC) through which the country of an international cellular radio network can be identified.

5. Method according to Claim 4,
in which,
the destination address (AVMSC, AB') also features a National Destination Code(NDC) through which the national network of an international cellular mobile radio network can be identified.

6. Method in accordance with one of the previous claims
in which,
the call is initiated by a mobile subscriber (A-MS) and a Mobile Switching Center of a mobile radio network as a switching center (VMSCA) receives the message (CSU), with which the setup of the signaling connection is requested.

7. Method in accordance with one of the Claims 1 to 5,
in which,
the call is initiated by a fixed network subscriber (A-WS) and switching center of a fixed network receives the message with which the setup of the signaling connection is requested.

8. Method in accordance with one of the previous claims
in which,
the message (IAM1) for connection setup which is sent from the switching center (VMSCA) to a Gateway Mobile Switching Center (GMSCA) and the message (ANM) for signaling the establishment of the call connection which is returned by the Gateway Mobile Switching Center (GMSCA) to the switching center (VMSCA) is sent in accordance with the ISDN User Part (ISUP) of the CCS7 Common Channel Signaling system.

9. Mobile communication system for routing call connections for a call routed to a mobile subscriber (B-MS) in each case who, regardless of his current location, is registered at least in his home network (HPLMN) with
- a switching center (VMSCA),
- which features means for receiving a message (CSU), in which a request for setting up a signaling connection and information identifying the called mobile subscriber (MSISDN) is contained
- which features means for sending a message (IAM1) for connection setup based on information of the called mobile subscriber to a Gateway Mobile Switching Center (GMSCA), and
- which features means for evaluating a destination address (AVMSC, AB') for billing the call connection, and with
- the Gateway Mobile Switching Center (GMSCA)
- which features means for sending a message (SRIL) across the networks for a location request to the home network (HPLMN) of the called mobile subscriber and means to set up a direct connection to a Visitor Mobile Switching Center (VMSCB),
- which features means for receiving a message (ANM) which is sent by the Visitor Mobile Switching Center (VMSCB) or with call forwarding set up by the called mobile subscriber (B-MS) by another switching center (B') and signals the establishment of the connection, **characterized in that** it
- features means for inserting a destination address (AVMSC) which is provided by the home network (HPLMN) or a destination address (AB'), which is provided for call forwarding by the Visitor Mobile Switching Center (VMSCB), into the message (ANM) and means for sending the destination address (AVMSC, AB') to the switching center (VMSCA).

## Revendications

1. Procédé d'acheminement de connexions d'appels pour des appels respectivement adressés à un abonné au service mobile (B-MS), qui indépendamment de son lieu de séjour actuel est enregistré dans au moins son réseau de localisation nominal (HPLMN), dans lequel
- au sein d'un réseau (IPLMN), un message (CSU) qui contient une demande pour l'établissement d'une connexion de signalisation et une information (MSISDN) identifiant l'abonné au service mobile appelé est réceptionné par un central (VMSCA),
- sur la base de l'information de l'abonné au service mobile appelé, un message (IAM1) est envoyé du central (VMSCA) vers un central mobile d'accès (GMSCA), pour l'établissement de la connexion,
- un message (SRIL) pour l'interrogation du lieu de séjour par le central mobile d'accès (GMSCA) vers le réseau de localisation nominal (HPLMN) de l'abonné au service mobile appelé est envoyé transréseaux, pour signaler l'assistance d'un acheminement optimisé, à l'aide duquel une connexion directe peut être établie entre le central mobile d'accès (GMSCA) et un central mobile visité (VMSCB),
- une adresse cible (AVMSC) est mise à disposition par le réseau de localisation nominal (HPLMN) et envoyée transréseaux vers le central mobile d'accès (GMSCA) dans un message (GMSCA), pour établir la connexion directe vers le central mobile visité (VMSCB), **caractérisé en ce que**
- lors de la réception d'un message (ANM) qui signale l'établissement de la connexion d'appel, un central mobile d'accès (GMSCA) intègre l'adresse cible (AVMSC) dans le message (ANM) et le renvoie au central (VMSCA), qui évalue l'adresse cible (AVMSC) pour la facturation de la connexion d'appel.

2. Procédé selon la revendication 1, **caractérisé en ce que**
- si un transfert d'appel est installé chez l'abonné au service mobile appelé, lors de la réception d'un message (RCH), contenant une nouvelle adresse cible (AB'), le central mobile d'accès (GMSCA) établit une connexion vers un central (B') déterminé par la nouvelle adresse cible (AB') et **en ce que**
- lors de la réception de l'appel (ANM) qui signale l'établissement de la connexion d'appel, le central mobile d'accès (GMSCA) intègre la nouvelle adresse cible (AB') dans le message (ANM) et le renvoie vers le central (VMSCA), qui évalue la nouvelle adresse cible (AB') pour la facturation de la connexion d'appel.

3. Procédé selon l'une quelconque des revendications 1 ou 2, **caractérisé en ce que** l'adresse cible (AVSCM, AB') est inscrite dans un champ d'informations (GN) du message (ANM), qui est utilisé pour y consigner des chiffres.

4. Procédé selon l'une quelconque des revendications précédentes, **caractérisé en ce que** l'adresse cible (AVMSC, AB') est munie d'au moins un identifiant de pays (CC), grâce auquel le réseau cellulaire mobile à portée internationale du pays est identifiable.

5. Procédé selon la revendication 4, **caractérisé en ce que** l'adresse cible (AVMSC, AB') est munie en supplément d'un identifiant national (NDC) grâce auquel le réseau national du réseau cellulaire mobile à portée internationale est identifiable.

6. Procédé selon l'une quelconque des revendications précédentes **caractérisé en ce que** l'appel est initié par un abonné au service mobile (A-MS) et en fonction de central (VMSCA), un central mobile d'un réseau mobile réceptionne le message (CSU) à l'aide duquel l'établissement de la connexion de signalisation est demandé.

7. Procédé selon l'une quelconque des revendications 1 à 5, **caractérisé en ce que** l'appel est initié par un abonné au réseau fixe (A-WS) et un central d'un réseau fixe réceptionne le message, à l'aide duquel l'établissement de la connexion de signalisation est demandé.

8. Procédé selon l'une quelconque des revendications précédentes, **caractérisé en ce que** le message (IAM1) pour l'établissement de la connexion qui est envoyé par le central (VMSCA) vers un central mobile d'accès (GMSCA) et le message (ANM) pour la signalisation de l'établissement de la connexion d'appel, qui est renvoyé par le central mobile d'accès (GMSCA) vers le central (VMSCA) sont transmis selon un sous-système d'utilisateur (ISUP) du système de signalisation centralisé CCS7.

9. Système de communication mobile pour l'acheminement de connexions d'appel pour des appels respectivement adressés à un abonné au service mobile (B-MS), qui indépendamment de son lieu de séjour actuel est enregistré dans au moins son réseau de localisation nominal (HPLMN), avec
- un central (VMSCA),
- comprenant des moyens pour la réception d'un message (CSU), contenant une demande pour l'établissement d'une connexion de signalisation et une information (MSISDN) caractérisant l'abonné au service mobile appelé et
- comprenant des moyens pour l'émission vers un central mobile d'accès (GMSCA d'un message (IAM1) pour l'établissement de la connexion sur la base de l'information de l'abonné au service mobile appelé ) et
- comprenant des moyens pour l'évaluation d'une adresse cible (AVMSC, AB') pour la facturation de la connexion d'appel et avec
- le central mobile d'accès (GMSCA)
- comprenant des moyens pour l'émission transréseaux d'un message (SRIL) pour l'envoi d'une interrogation du lieu de séjour vers le réseau de localisation nominal et des moyens pour l'établissement d'une connexion directe vers un central mobile visité (VMSCB),
- comprenant des moyens pour la réception d'un message (ANM) qui est envoyé par le central mobile visité (VMSCB) ou qui dans le cas d'un transfert d'appel installé chez l'abonné au service mobile appelé (B-MS) est envoyé par un autre central (B') et qui signale l'établissement de la connexion d'appel,
**caractérisé en ce qu'**il comprend
- des moyens pour l'intégration dans le message (ANM) d'une adresse cible (AVMSC), mise à disposition dans le réseau de localisation nominal (HPLMN) ou d'une adresse cible (AB') qui est mise à disposition en cas d'un transfert d'appel par le central mobile visité (VMSCB) et des moyens pour envoyer l'adresse cible (AVMSC, AB') vers le central (VMSCA).
